Europäisches Patentamt

European Patent Office

Office européen des brevets

(11) Veröffentlichungsnummer: **0 112 874**
**B1**

# (12) EUROPÄISCHE PATENTSCHRIFT

(45) Veröffentlichungstag der Patentschrift:
**14.06.89**

(21) Anmeldenummer: **83902090.6**

(22) Anmeldetag: **01.07.83**

(86) Internationale Anmeldenummer:
**PCT/EP 83/00166**

(87) Internationale Veröffentlichungsnummer:
**WO 84/00198 (19.01.84 Gazette 84/2)**

(51) Int. Cl.⁴: **F 16 C 39/06**

(54) **MAGNETLAGER FÜR EINEN ROTOR.**

(30) Priorität: **03.07.82 DE 3224887**

(43) Veröffentlichungstag der Anmeldung:
**11.07.84 Patentblatt 84/28**

(45) Bekanntmachung des Hinweises auf die Patenterteilung:
**14.06.89 Patentblatt 89/24**

(84) Benannte Vertragsstaaten:
**FR GB**

(56) Entgegenhaltungen:
**FR-A- 2 336 602**
**GB-A- 1 458 687**

**ETZA, vol. 95, no. 10, 1974, (Berlin, DE) W. Braun "Aktive Lagerung um laufender Körper", pages 520 to 523**
**SKRIPTUM "REGELUNGSTECHNIK I" E.D. GILLES UND U. KÖPF, UNIVERSITÄTS/STUTTGART, 1974, pp. 159-167**

**Die Akte enthält technische Angaben, die nach dem Eingang der Anmeldung eingereicht wurden und die nicht in dieser Patentschrift enthalten sind.**

(73) Patentinhaber: **Deutsche Forschungs- und Versuchsanstalt für Luft- und Raumfahrt e.V., Linder Höhe Postfach 90 60 58, D-5000 Köln 90 (DE)**
Patentinhaber: **TELDIX GmbH, Grenzhöfer Weg 36 Postfach 105608, D-6900 Heidelberg 1 (DE)**

(72) Erfinder: **LANGE, Thomas, Obermoosweg 3, D-8031 Gilching (DE)**
Erfinder: **HEIMBOLD, Gerhard, Amsterdamer Strasse 1, D-8000 München (DE)**
Erfinder: **INNERHOFER, Günter, Rembrandring 19 b, D-6054 Rodgau 1 (DE)**

(74) Vertreter: **Kammer, Arno, Dipl.-Ing., TELDIX GmbH Postfach 10 56 08 Grenzhöfer Weg 36, D-6900 Heidelberg 1 (DE)**

## Beschreibung

Die Erfindung betrifft ein Magnetlager für einen sich um eine Achse drehenden Rotor, bestehend aus zwei in Richtung der Drehachse zueinander versetzten Lagerteilen, die für zwei zur Drehachse senkrechte Richtungen die translatorischen Abweichungen der augenblicklichen Lage der Drehachse von der Sollage ermitteln und durch Steuerung von Magnetkräften ausregeln und die außerdem Kippbewegungen des Rotors um zu den beiden zur Drehachse senkrechten Richtungen parallele Drehachsen ermitteln und ein Rückstellmoment um diese Achsen erzeugen, wobei zusätzlich Schaltmittel zur Dämpfung der Nutationsfrequenz vorgesehen sind.

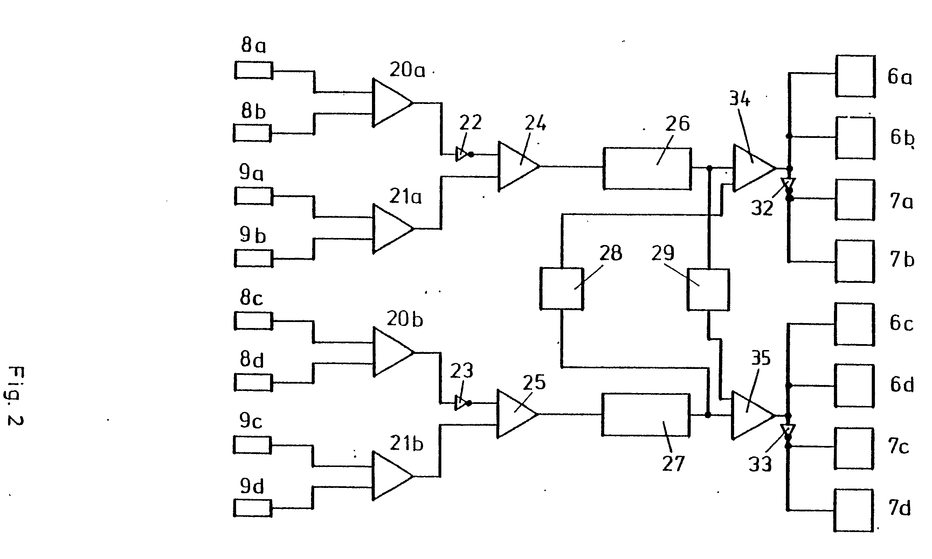

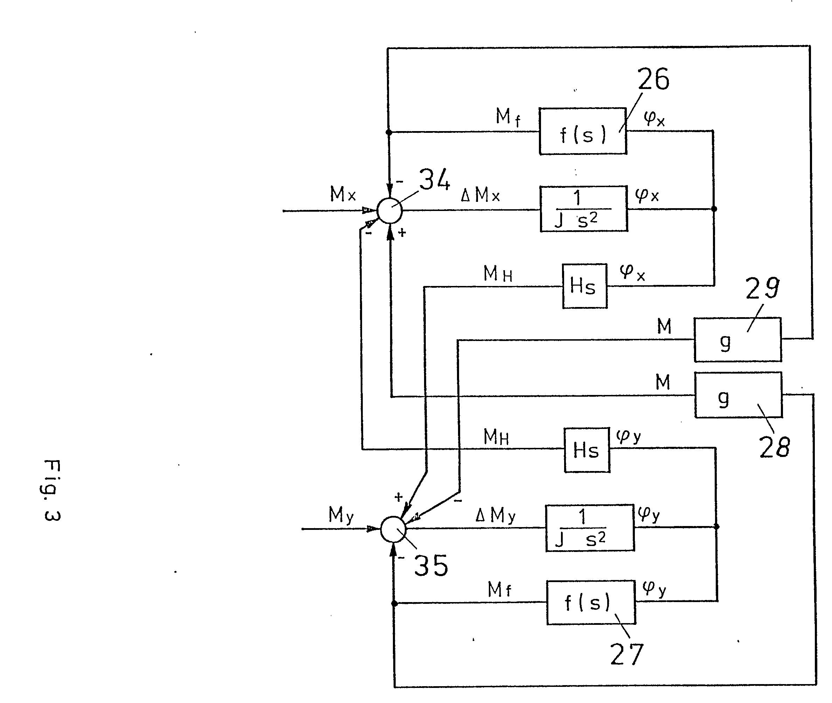

Ein Magnetlager mit den oben aufgeführten Merkmalen ist z. B. aus der DE-B- 22 63 096 bekannt. Gemäß Figur 6 werden dort neben den Signalen zum Ausregeln von translatorischen Auslenkungen des Rotors durch Summen- und Differenzbildung «Kippsignale» gebildet, die zur Ausregelung von Kippbewegungen benutzt werden. Für die «Kippsignale» werden zur Dämpfung der Nutationsfrequenz sehr breitbandige Verstärker mit grosser Phasenanhebung benötigt. Um dies zu vermeiden, wird anhand der Figur 4, Figur 6 und Figur 7 eine Lösung beschrieben, die eine Dämpfung der Nutationsfrequenz bei relativ schmalbandigem Verstärker zuläßt. Jedoch wird auch hier eine komplizierte Schaltungsanordnung zur Erzielung dieses Ergebnisses benötigt.

Aus der Literaturstelle des Skriptums «Regelungstechnik I», E. D. Gilles und U. Köpp, Institut für Systemdynamik und Regelungstechnik der Universität Stuttgart, Ausgabe 1974, ist es bekannt, zwei miteinander verkoppelte Systeme, z.B. v-kanonischer Struktur durch Verwendung von Kreuzkoppelzweigen voneinander zu entkoppeln, um jeweils nur vom zugehörigen System abhängige Ausgangsgrößen zu erhalten. Eine Entkoppelung ist zur Lösung der der Erfindung zugrunde liegenden Aufgabe gerade nicht geeignet.

Diese Feststellung gilt in der gleichen Weise für die in der Literaturstelle ETZ, Bd. 95 «Aktive Lagerung umlaufender Körper», Werner Braun, Seiten 520 bis 523, Ausgabe 1974. Dort wird ein magnetisch gelagerter Läufer beschrieben und zur Aufhebung von Verkoppelungen zwischen den Regelkreisen wird die Verwendung eines Entkoppelnetzwerkes vorgeschlagen.

Der Erfindung liegt die Aufgabe zugrunde, die Dämpfung der Nutationsschwingungen des Rotors mit zusätzlichen einfachen Mitteln leistungsgünstiger als bisher zu erreichen. Gelöst wird diese Aufgabe durch die im Anspruch 1 angegebenen Merkmale.

Neben der Dämpfung der Nutationsschwingung des Rotors mit sehr einfachen Mitteln und damit verbunden einem Leistungsgewinn für das Magnetlager bei einfacherer Ausbildung der Verstärker (schmalbandiger) für die «Kippsignale» wird zusätzlich erreicht, daß die hochfrequente Eigenbewegung (Nutation) des Gyrostaten, d.h., des Hüllkörpers, der den eingebauten, schnell laufenden Rotor enthält, gedämpft und damit dieser Hüllkörper (passiv) stabilisiert wird.

Insbesondere ist die Anwendung der Erfindung für schwungradstabilisierte Satelliten von Interesse, da sie eventuell am Satelliten auftretende Nutationsbewegungen dämpft und nicht aufklingen läßt. Letzteres würde unter Umständen eine Fehlmission des Satelliten nach sich ziehen.

Anhand der Zeichnung soll ein Ausführungsbeispiel der Erfindung erläutert werden. Es zeigen

Fig. 1 einen magnetisch gelagerten Rotor in prinzipieller Darstellung,

Fig. 2 eine Regelschaltung zur Ausregelung von Kippschwingungen und mit einer erfindungsgemäßen Kreuzkopplung,

Fig. 3 die regelungstechnische Darstellung der beiden Regelkreise für die Kippregelung.

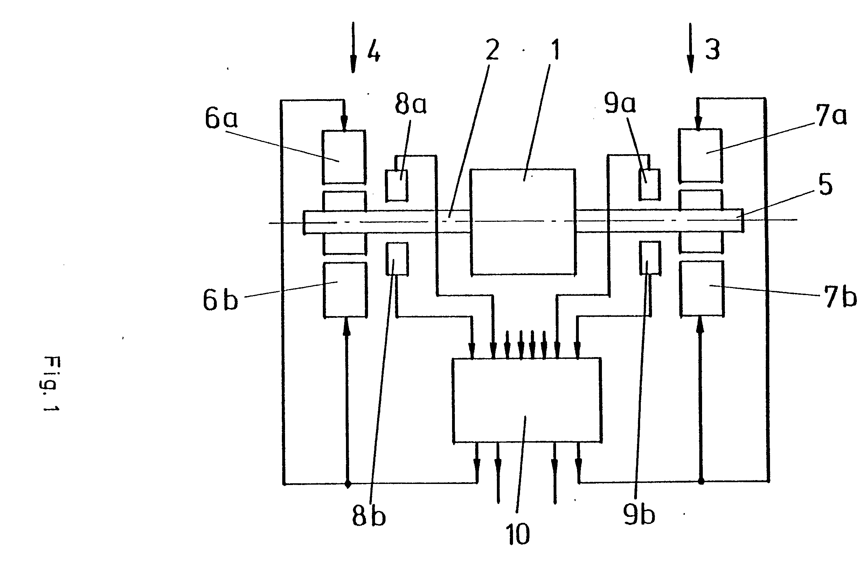

In Fig. 1 der Zeichnung ist mit 1 ein Rotor und mit 2 seine Welle bezeichnet; der Rotor ist in zwei Teilmagnetlagern 3 und 4 magnetisch gelagert. Von diesen Teillagern 3 und 4 ist jeweils nur die Lagerung in einer Ebene dargestellt. Eine entsprechende Lagerung muß in der zur Papierebene senkrechten Ebene durch die Sollage der Rotorachse 5 vorgesehen sein.

Jedes Teillager besteht aus den am Stator vorgesehenen Elektromagneten 6a und 6b bzw. 7a und 7b und Sensoren 8a und 8b bzw. 9a und 9b. Entsprechende Elektromagnete 6c und 6d bzw. 7c und 7d sowie Sensoren 8c und 8d bzw. 9c und 9d seien in der dazu senkrechten Ebene angeordnet.

Alle Sensoren 8 und 9 sind mit einem Regler 10 verbunden, der seinerseits mit den Elektromagneten 6 und 7 verbunden ist und diese steuert.

In Figur 2 sind die Sensoren 8a–c und 9a–c sowie die Elektromagnete 6a–c und 7a–c als Blöcke dargestellt. Zwischen diesen Blöcken sind die erfindungsgemäß ausgebildeten Kippregelkreise eingezeichnet. Jeweils zwei sich gegenüberliegende Sensoren 8a und b, 8c und d, 9a und b und 9c und d werden mittels Verstärker 20a und b bzw. 21a und b so zusammengefaßt, daß ihr Ausgangssignal in der Sollage des Rotors 0 ist und mit steigender Abweichung des Rotors von seiner Sollage anwächst, wobei das Vorzeichen des Ausgangssignals die Richtung der Abweichung kennzeichnet. Die Ausgangssignale der Verstärker 20a und 21a bzw. 20b und 21b, die jeweils von den Sensoren einer Ebene abgeleitet sind, werden dann mittels der Inverter 22 und 23 und der Verstärker 24 und 24 so zusammengefaßt, daß ihr Ausgangsignal ein Maß für die Kippwinkel $\varphi x$ und $\varphi y$ gegen die beiden Ebenen x bzw. y darstellen. Über Regelverstärker 26 bzw. 27, die nun nicht mehr so breitbandig sein müssen und die eine Phasenanhebung bewirken, und Verstärker 34 und 35 gelangen diese Signale zu den Elektromagneten 6a und b bzw. 6c und d direkt und 7a und b bzw. 7c und d invertiert (Inverter 32 bzw. 33). Hierdurch werden Momente um die Kippachsen auf den Rotor ausgeübt und dieser in seine Sollage rückgestellt.

Erfindungsgemäß sind noch Kreuzkoppelzweige vorgesehen, durch die die Ausgangssignale der Regelverstärker 26 bzw. 27 zu den Verstärkern 34 bzw. 35 des jeweils anderen Kanals gekoppelt werden. In diese Zweige sind als Proportionalverstärker ausgebildete Kreuzkopplungsverstärker 28 und 29 eingeschaltet.

Wie erläutert, wird durch die Kreuzkopplungszweige eine Nutation des Rotors, aber auch eine Nutation des den Rotor beinhaltenden Körpers, z. B. eines Satelliten, unterdrückt.

Die Vorzeichen der Ausgangssignale der Kreuzkopplungsverstärker 28 und 29 ergeben sich aus der Regelkreisdarstellung der Fig. 3. Dort sind mit Mx ein Störmoment um die x-Achse und mit My ein Störmoment um die y-Achse bezeichnet, die über das Trägheitsmoment J um die Kippachsen Kippwinkel φx bzw. φy auslösen. Durch die dynamische Kopplung der Freiheitsgrade über den Drall H des Rotors entstehen Kreiselmomente $M_H$ im jeweils anderen Regelkreis. Die Regelverstärker 26 uns 27 mit einer Übertragungsfunktion f (s) erzeugen aus den Kippwinkeln ein Rückstellmoment $M_r$. Schließlich sind noch die Kreuzkopplungsverstärker 28 und 29 eingezeichnet, die eine proportionale Verstärkung g bewirken und jeweils ein Kreuzkopplungsmoment M erzeugen. Die Vorzeichen der diese kreuzgekoppelten Momente bewirkenden Verstärkung sind jeweils entgegengesetzt dem Vorzeichen des Dralls H, das in den Kreiselmomenten $M_H$ der entsprechenden Achsen auftritt.

Durch diese Anordnung ist es möglich, die Regelverstärker 26 und 27 mit geringerer Bandbreite und daher geringerer dynamischer Verstärkungsanhebung auszulegen. Das bedeutet eine geringere Belastung der Magnetspulen durch verstärktes Sensorrauschen, also eine Verringerung der Übersteuerungsgefahr und Einsparung elektrischer Energie.

**Patentansprüche**

1. Magnetlager für einen sich um eine Achse drehenden Rotor, bestehend aus zwei in Richtung der Drehachse zueinander versetzten Lagerteilen, die für zwei zur Drehachse senkrechte Richtungen die translatorischen Abweichungen der augenblicklichen Lage der Drehachse von der Sollage ermitteln und durch Steuerung von Magnetkräften ausregeln und die außerdem Kippbewegungen des Rotors um zu den beiden zur Drehachse senkrechten Richtungen parallele Achsen ermitteln und über zwei Regelverstärker enthaltende Regelkanäle ein Rückstellmoment um diese Achsen erzeugen, wobei zusätzlich Schaltmittel zur Dämpfung der Nutationsfrequenz vorgesehen sind, dadurch gekennzeichnet, daß zwischen den die Regelverstärker (26 bzw. 27) und Summierglieder (34 bzw. 35) enthaltenden Regelkanälen Kreuzkoppelzweige eingeschaltet sind, die je einen als Proportionalverstärker ausgebildeten Kreuzkoppelverstärker (28 bzw. 29) enthalten und jeweils ein von einem Regelkanal (26, 34 bzw. 27, 35) abgeleitetes Signal dem Signal des anderen Regelkanals (27, 35 bzw. 26, 34) mittels der Summierglieder (34 bzw. 35) zufügen und daß die Vorzeichen der diese kreuzgekoppelten Momente M bewirkenden Verstärkungen jeweils entgegengesetzt dem Vorzeichen des Dralls H sind, das in den Kreiselmomenten $M_H$ der entsprechenden Achsen auftritt.

2. Magnetlager nach Anspruch 1, dadurch gekennzeichnet, daß das Ausgangssignal jedes Regelverstärkers (26 oder 27) dem Kreuzkopplungsverstärker (28 oder 29) zugeführt und dessen Ausgangssignal dem Ausgangssignal des Regelverstärkers (27 oder 26) zugefügt wird.

3. Magnetlager nach Anspruch 1 oder 2, gekennzeichnet durch seine Anwendung als Lager eines Schwungrads eines schwungradstabilisierten Satelliten.

**Claims**

1. A magnetic bearing for a rotor rotating about an axis, comprising two bearing parts offset from each other in the direction of the rotary axis, which determine, and stabilise due to control by magnetic forces, the translatory deviations of the momentary position of the rotary axis from the desired position for two directions perpendicular to the rotary axis and which also determine tilting movements of the rotor about axes parallel to the two directions perpendicular to the rotary axis and produce a resetting moment about these axes by means of two control channels containing control amplifiers, in which switching means are also provided for damping the nutation frequency, characterised in that cross couplings are connected between the control channels containing the control amplifiers (26 and 27) and the summing elements (34 and 35), which each contain a cross coupling amplifier (28 and 29 respectively), formed as a proportional amplifier, which in each case add a signal derived from a control channel (26, 34 or 27, 35) to the signal of the other control channel (27, 35 or 26, 34 respectively) with the aid of the summing elements (34 and 35 respectively) and that the signs of the amplifications causing these cross coupled moments M are in each case opposite to the sign of the spin H which occur in the gyroscopic couples $M_H$ of the corresponding axes.

2. A magnetic bearing according to claim 1, characterised in that the output signal of each control amplifier (26 or 27) is fed to the cross coupling amplifier (28 or 29) and its output signal is added to the output signal of the control amplifier (27 or 26).

3. A magnetic bearing according to claim 1 or 2 characterised by its use as a bearing of a flywheel of a flywheel stabilised satellite.

**Revendications**

1. Palier magnétique pour un rotor pouvant tourner autour d'un axe, se composant de deux parties décalées l'une par rapport à l'autre dans la direction de l'axe de rotation, qui déterminent, pour deux directions perpendiculaires à l'axe de rotation, les écarts de translation de la position instantanée de l'axe de rotation par rapport à la position de consigne en assurant leur compensation par régulation par commande de forces magnétiques et qui déterminent en outre des mouvements de basculement du rotor autour d'axes de rotation parallèles aux deux directions perpendiculaires à l'axe de rotation précité en produisant un couple de rappel autour desdits axes, des moyens additionnels de commande étant prévus pour l'amortissement de la fréquence de nutation, caractérisé en ce qu'il est prévu entre les canaux de régulation contenant les amplificateurs de régulation (26 ou 27) et les organes de sommation (34 ou 35) des dérivations de couplage en croix qui contiennent chacune un amplificateur de couplage en croix (28 ou 29) agencé comme un amplificateur proportionnel et qui ajoutent chacune un signal dérivé d'un canal de régulation (26, 34 ou 27, 35) au signal de l'autre canal de régulation (27, 35 ou 26, 34) au moyen des organes de sommation (34 ou 35) et en ce que les signes des amplifications produisant ces moments couplés en croix M sont respectivement opposés au signe du moment cinétique H, qui se produit dans les moments gyroscopiques $M_H$ des axes correspondants.

2. Palier magnétique selon la revendication 1, caractérisé en ce que le signal de sortie de chaque amplificateur de régulation (26 ou 27) est appliqué à l'amplificateur de couplage en croix (28 ou 29) et son signal de sortie est ajouté au signal de sortie de l'amplificateur de régulation (27 ou 26).

3. Palier magnétique selon une des revendication 1 ou 2, caractérisé par son utilisation comme palier d'un volant d'un satellite stabilisé par un volant.

Fig. 1

Fig. 2

7

Fig. 3